# EUROPÄISCHE PATENTSCHRIFT

(11) **EP 1 932 702 B1**
(45) Veröffentlichungstag und Bekanntmachung des Hinweises auf die Patenterteilung: **25.04.2012**
(21) Anmeldenummer: 07023755.7
(22) Anmeldetag: 07.12.2007
(51) Int. Cl.: B60J 7/20

(54) **Cabriolet-Fahrzeug mit einem in einem Verdeckkasten ablegbaren Verdeck**
Cabriolet with a storage compartment for roof parts
Cabriolet avec un compartiment pour le toit du véhicule

(30) Priorität: 16.12.2006 DE 102006059539
(43) Veröffentlichungstag der Anmeldung: 18.06.2008
(73) Patentinhaber: Wilhelm Karmann GmbH, 49084 Osnabrück (DE)
(72) Erfinder: Jahn, Jorg, 32257 Bünde (DE); Hornung, Christian, 49504 Wersen (DE)
(74) Vertreter: Kronthaler, Schmidt & Coll.

(56) Entgegenhaltungen:
- EP-A- 0 356 640
- EP-A- 1 228 914
- DE-A1- 19 723 328
- DE-C1- 19 957 174
- DE-U1-202005 020 667

## Beschreibung

Die Erfindung betrifft ein Cabriolet-Fahrzeug mit einem in einem Verdeckkasten ablegbaren Verdeck nach der im Oberbegriff des Patentanspruches 1 näher definierten Art.

Aus der Praxis bekannte Cabriolet-Fahrzeuge weisen einen Verdeckkasten auf, in welchen ein beispielsweise als Hard-Top oder als Soft-Top ausgebildetes Verdeck des Cabriolet-Fahrzeugs in geöffnetem Verdeckzustand abgelegt werden kann.

Beispielsweise aus der DE 101 38 163 C2 ist ein derartiger Verdeckkasten mit einem Verdeckkastendeckel bekannt, wobei ein Kastenboden des Verdeckkastens über eine Kastenbodenkinematik zwischen einer der geschlossenen Position des Fahrzeugverdecks zugeordneten angehobenen Lage und einer der geöffneten Position zugeordneten abgesenkten Lage verstellbar ist. Die Kastenbodenkinematik ist hierbei mit dem Verdeck gekoppelt, wobei bei einer Überführung des Verdecks von der geschlossenen in die geöffnete Position die Bewegung eines Spannbügels des Verdecks die Absenkung des Kastenbodens auslöst. Der abgesenkte Kastenboden ist dabei derart ausgebildet, dass er von seiner Kastenbodenkinematik entkoppelt werden kann.

Befindet sich bei einer Überführung des Verdecks von der geschlossenen in die geöffnete Position ein Gegenstand im Bewegungsraum des Kastenbodens führt, dies bei einem derart mit der Verdeckkinematik verbundenen Verdeckkasten nachteilhafterweise zu einem Abbruch der Verdecköffnungsbewegung. Insbesondere wenn das Verdeck während einer Fahrt geschlossen wird, kann dies zu Irritationen des Bedieners führen.

Auch aus der gattungsgemäßen EP 1 228 914 A2 ist ein Verdeckkasten eines Cabriolet-Fahrzeugs mit einem darin ablegbaren Verdeck bekannt. Der Verdeckkasten ist hierbei in einem heckseitigen Fahrzeugbereich an dem heckseitigen Stauraum angeordnet und gegenüber diesem durch eine variable Trennvorrichtung abteilbar, wobei ein einen Boden des Verdeckkasten bildender Plattenkörper zwischen einer oberen Stellung und einer unteren Verdeckaufnahmestellung bewegt werden kann. Zum Erkennen von sich im Bewegungsraum des wenigstens einen beweglichen Plattenkörpers der Trennvorrichtung befindlichen Gegenständen ist ein Sensor ausgebildet, welcher dem Plattenkörper zugeordnet ist.

Hierdurch können Hindernisse, beispielsweise Gepäckstücke, in der Bewegungsbahn des Plattenkörpers vorteilhafterweise erfasst werden, womit die Bewegung des Plattenkörpers auch ohne optische Kontrolle durch einen Benutzer zuverlässig durchgeführt werden kann. Allerdings ist der apparative und sensorische Aufwand für eine derartige Ausgestaltung groß.

Es ist Aufgabe der vorliegenden Erfindung, ein Cabriolet-Fahrzeug mit einem in einem Verdeckkasten ablegbaren Verdeck zu schaffen, bei dem auf einfache Weise ein großer nutzbarer heckseitiger Stauraum in allen Verdeckzuständen realisiert ist, wobei eine Überführung des Verdeck von einem offenen in einen geschlossenen Zustand auf möglichst sichere Art und Weise realisiert ist.

Diese Aufgabe wird bei einem Cabriolet-Fahrzeug mit einem in einem Verdeckkasten ablegbaren Verdeck der eingangs genannten Art mit den Merkmalen des kennzeichnenden Teils des Patentanspruches 1 gelöst.

Die Erfindung sieht ein Cabriolet-Fahrzeug mit einem in einem Verdeckkasten ablegbaren Verdeck vor, wobei der Verdeckkasten in Fahrzeugheckrichtung hinter einem mit Fondsitzen ausgebildeten Fahrgastraum angeordnet und gegenüber einem heckseitigen Stauraum durch wenigstens einen einen Boden des Verdeckkastens bildenden Plattenkörper abgegrenzt ist, der in Fahrzeughöhenrichtung zwischen einer unteren Verdeckaufnahmestellung und einer oberen, den heckseitigen Stauraum vergrößernden Stellung bewegbar ist. Erfindungsgemäß ist ein dem Verdeckkasten zugeordneter Antrieb derart angesteuert, dass der wenigstens eine Plattenkörper als Grundstellung bei erkanntem Nichtbeladungszustand seines Bewegungsraumes, d. h., wenn sich kein Gegenstand in dem Bewegungsraum des Plattenkörpers befindet, die untere Verdeckaufnahmestellung einnimmt und der Plattenkörper bei einem Öffnen eines den heckseitigen Stauraum abschließenden Deckels in seine obere Stellung bewegt ist.

Bei einem erfindungsgemäß ausgebildeten Cabriolet-Fahrzeug ist das Überführen des Verdecks von einem offenen in einen geschlossenen Zustand besonders sicher, da sich der Plattenkörper des Verdeckkastens bei geöffnetem Verdeck bereits in der unteren Verdeckaufnahmestellung befindet. Somit werden sich im heckseitigen Stauraum befindliche Gegenstände während einer Fahrt daran gehindert, in den Bewegungsraum des Plattenkörpers des Verdeckkastens einzutreten, und die Gefahr eines Abbruchs beziehungsweise einer Reversion der Verdeckbewegung, welche insbesondere bei einer Überführung des Verdecks von einer geschlossenen in eine geöffnete Position oder umgekehrt während einer Fahrt zu Irritationen des Benutzers führen kann, wird vorteilhafterweise reduziert bzw. ausgeschlossen.

Da der Plattenkörper bei einem Öffnen des den heckseitigen Stauraum abschließenden Deckels in seine obere Stellung bewegt wird, steht einem Benutzer bei einem gewünschten Beladen des heckseitigen Stauraums das größtmögliche Volumen des heckseitigen Stauraums zur Verfügung.

Wenn dem Plattenkörper bei dem erfindungsgemäßen Cabriolet-Fahrzeug ein eigener Antrieb zugeordnet ist, besteht vorteilhafterweise eine große Freiheit in der Realisierung der Positionen des Plattenkörpers des Verdeckkastens. Gegenüber herkömmlichen, an die Verdeckkinematik angebundenen Verdeckkästen, kann der Verdeckkasten somit auch unabhängig von den Bewegungszuständen des Verdecks bewegt werden.

Bei einer vorteilhaften Ausgestaltung ist der Plattenkörper von einer dem Antrieb zugeordneten Mechanik in Fahrzeughöhenrichtung insbesondere mit einer geringen Überschusskraft verfahrbar. Hierbei ist die Gefahr einer Beschädigung von sich im heckseitigen Stauraum befindlichem Ladegut reduziert.

Eine auf einfache Art und Weise mögliche Bewegung des Plattenkörpers von seiner oberen Stellung in seine untere Verdeckaufnahmestellung und umgekehrt ist realisiert, wenn der Plattenkörper mit wenigstens einer Führungsschiene wirkverbunden ist, welche mit dem Antrieb über die Mechanik zusammenwirkt, wobei der Plattenkörper mittels einem mit der Führungsschiene zusammenwirkenden Schlitten bewegt wird.

Auf einfach Weise kann das sich in dem heckseitigen Stauraum befindliche Ladegut geschützt werden, wenn eine Detektiereinrichtung vorgesehen ist, mittels welcher eine Kollision des von seiner oberen Stellung in seine untere Verdeckaufnahmestellung bewegten Plattenkörpers mit einem sich in dem heckseitigen Stauraum befindlichen Gegenstand mittels Bewegungsparameter detektierbar ist.

In einer vorteilhaften Ausgestaltung eines erfindungsgemäßen Cabriolet-Fahrzeugs ist es vorgesehen, dass der Antrieb als elektrischer Antrieb ausgebildet ist und die Detektiereinrichtung zur Kollisionserkennung bei einer Bewegung des Plattenkörpers aus seiner oberen Stellung in seine untere Verdeckaufnahmestellung mittels des Motorstroms des elektrischen Antriebs und/oder der Verfahrgeschwindigkeit und/oder der Verfahrzeit des Plattenkörpers des Verdeckkastens ausgelegt ist. Hierdurch kann auf einfache und sichere Weise der Ladezustand im heckseitigen Stauraum erkannt werden und ein Einklemmschutz gewährleistet werden.

Eine hinsichtlich der Kosten vorteilhafte Ausführung kann vorsehen, dass ein insbesondere als Verdecksteuergerät ausgebildetes Steuergerät auch zur Steuerung der Bewegung des wenigstens einen Plattenkörpers verwendet wird, wobei dem Steuergerät ein Speicher zur Speicherung des Beladungszustands des heckseitigen Stauraums zugeordnet ist.

Durch die Zuordnung eines Speichers zu dem Steuergerät kann dem Fahrer des Cabriolet-Fahrzeugs beispielsweise mit Hilfe einer Anzeige im Bereich der Armaturen mitgeteilt werden, wenn sich Ladegut in dem Bewegungsraum des Plattenkörpers des Verdeckkastens befindet, und somit verhindert werden, dass das Verdeck bei einem Öffnungsvorgang in einer Zwischenposition zwischen einer geschlossenen und einer geöffneten Position zum Stehen kommt.

In einer vorteilhaften Ausbildung eines erfindungsgemäßen Cabriolet-Fahrzeugs ist es vorgesehen, dass der Plattenkörper bei einem geschlossenen Zustand des den heckseitigen Stauraum abschließenden Deckels und bei einer Betätigung einer Zündung des Cabriolet-Fahrzeugs in seine untere Verdeckaufnahmestellung bewegt wird, so dass sich in dem heckseitigen Stauraum befindliches Ladegut an einem Verrutschen insbesondere in den Bewegungsraum des Plattenkörpers des Verdeckkasten gehindert wird und somit ein sicheres Überführen des Verdecks von seiner geschlossenen Position in seine geöffnete Position erreicht werden kann.

Ein punktgenaues Bewegen des Plattenkörpers des Verdeckkastens kann vorteilhafterweise dadurch sichergestellt werden, dass ein Sensor zur Erkennung der Endlagenposition der oberen Stellung des Plattenkörpers und der unteren Verdeckaufnahmestellung des Plattenkörpers vorgesehen ist.

Wird im heckseitigen Stauraum ein Schalter vorgesehen, mittels welchem eine Bewegung des Plattenkörpers des Verdeckkastens von seiner oberen Stellung in seine untere Verdeckaufnahmestellung auslösbar ist, kann der Verdeckkasten beispielsweise nach dem Beseitigen von sich in dem Bewegungsraum des Plattenkörpers des Verdeckkastens befindlichem Ladegut auch aus dem Heckbereich des Cabriolet-Fahrzeugs durch einen Benutzer bewegt werden, ohne dass dieser in das Cabriolet-Fahrzeug einsteigen muss. Somit kann der Benutzer, wenn er den Plattenkörper des Verdeckkastens während des Beladens des heckseitigen Stauraums in seine untere Verdeckaufnahmestellung verfährt, die maximale Beladungshöhe des heckseitigen Stauraums vorteilhafterweise einfach einschätzen.

Um einem Benutzer einen Anhaltspunkt für den Bewegungsraum des Plattenkörpers des Verdeckkastens zu geben, kann es in einer vorteilhaften Ausgestaltung der Erfindung vorgesehen sein, dass im heckseitigen Stauraum, beispielsweise an einer Seitenverkleidung, Markierungen vorgesehen sind, anhand derer die maximal zulässige Ladehöhe, bis zu welcher der heckseitige Stauraum beladen werden kann ohne ein Eingreifen in den Bewegungsraum des Plattenkörpers zu verursachen, visuell einschätzbar ist.

In einer sehr einfachen Ausgestaltung des Verdeckkastens ist es vorgesehen, dass der Plattenkörper einen ersten Plattenkörper bildet und der Verdeckkasten einen zweiten Plattenkörper aufweist, welcher den Verdeckkasten bei sich in der Verdeckaufnahmestellung befindlichem ersten Plattenkörper heckseitig gegenüber dem verbleibenden Stauraum begrenzt, wobei der zweite Plattenkörper bei dem sich in der oberen Stellung befindlichen ersten Plattenkörper um einen oberen, sich an einer Fahrzeugkarosserie befindlichen Gelenkpunkt insbesondere in Fahrzeugfrontrichtung verschwenkt ist.

Insbesondere vorteilhaft ist es, wenn der zweite Plattenkörper mit dem ersten Plattenkörper über eine einfach ausbildbare Kulissenführung zwangsgesteuert verbunden ist, so dass für den zweiten Plattenkörper kein separater Antrieb benötigt wird.

Weitere Vorteile und vorteilhafte Ausführungen eines Cabriolet-Fahrzeugs nach der Erfindung ergeben sich aus den Patentansprüchen, der Zeichnung und der Beschreibung.

Nachfolgend ist ein vorteilhaftes Ausführungsbeispiel anhand der Zeichnung prinzipmäßig beschrieben.

Es zeigt:
- Fig. 1: eine vereinfachte Darstellung eines Cabriolet-Fahrzeugs mit einem Verdeck in einer Schlieißstellung;
- Fig. 2: eine stark vereinfachte ausschnittsweise Darstellung des Cabriolet-Fahrzeugs der Fig. 1 mit einem einen ersten Plattenkörper und einen zweiten Plattenkörper aufweisenden Verdeckkasten, wobei sich der erste Plattenkörper in einer unteren Verdeckaufnahmestellung befindet;
- Fig. 3: eine stark vereinfachte ausschnittsweise Darstellung des Cabriolet-Fahrzeugs der Fig. 1 und 2, wobei sich der erste Plattenkörper in einer oberen Stellung befindet und ein heckseitiger Deckel zur Beladung des heckseitigen Stauraums geöffnet ist;
- Fig. 4: eine Prinzipskizze des Verdeckkastens der Fig. 2 in Alleinstellung mit dem sich in der unteren Verdeckaufnahmestellung befindlichen ersten Plattenkörper;
- Fig. 5: eine Prinzipskizze des Verdeckkastens der Fig. 3 in Alleinstellung, wobei der ersten Plattenkörper in der oberen Stellung dargestellt ist;
- Fig. 6: eine dreidimensionale Prinzipskizze des Verdeckkastens mit dem elektrischen Antrieb, wobei der erste Plattenkörper in der unteren Verdeckaufnahmestellung dargestellt ist;
- Fig. 7: eine dreidimensionale Prinzipskizze des Verdeckkastens der Fig. 6 mit dem elektrischen Antrieb, wobei der erste Plattenkörper in der oberen Stellung dargestellt ist;
- Fig. 8: eine stark vereinfachte ausschnittsweise Darstellung des Cabriolet-Fahrzeugs der Fig. 1 bis 3 mit einem sich in dem heckseitigen Stauraum befindlichen Ladegut; und
- Fig. 9: ein Ablaufdiagramm eines Verfahrens zur Ansteuerung der Plattenkörper des Verdeckkastens mittels eines Verdecksteuergeräts.

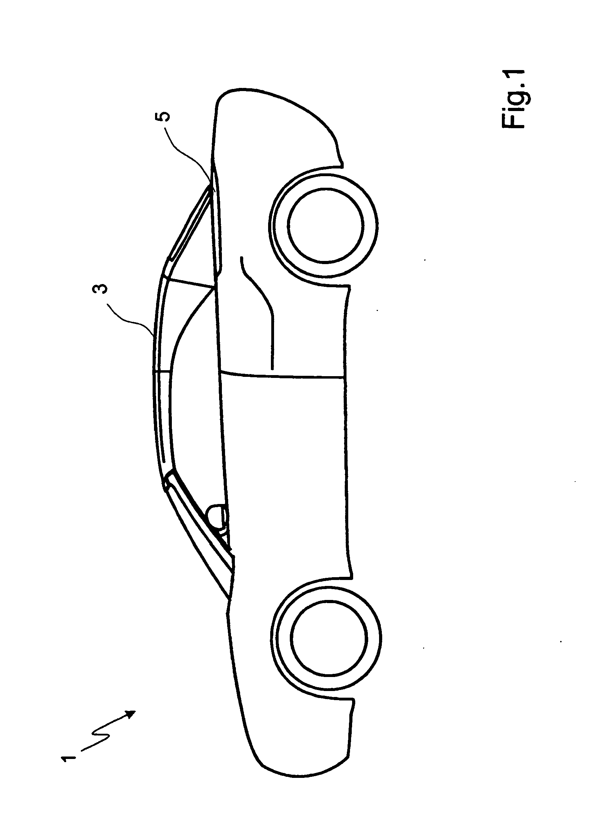

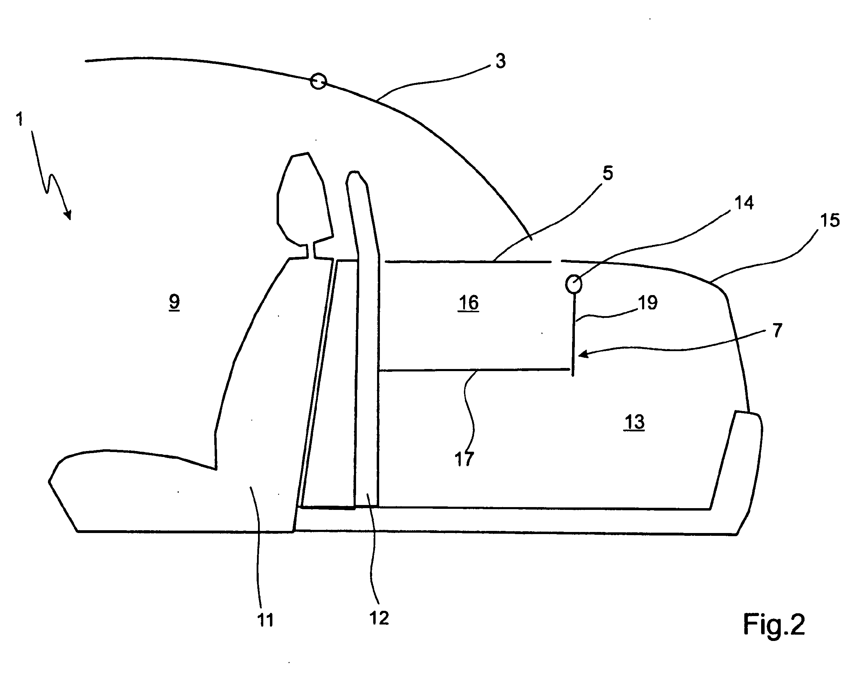

In Fig. 1 ist ein Cabriolet-Fahrzeug 1 mit einem in einer Schließstellung dargestellten, vorliegend dreiteilig ausgebildeten Verdeck 3 abgebildet. Weiterhin ist in der Fig. 1 ein Verdeckkastendeckel 5 ersichtlich, der bei einer Überführung des Verdecks 3 von einem geschlossenen Zustand in einen offenen Zustand derart geöffnet werden kann, dass das Verdeck 3 in einen in der Fig. 2 dargestellten Verdeckkasten 7 abgelegt werden kann.

Der Verdeckkasten 7 weist einen ersten Plattenkörper 17 und einen zweiten Plattenkörper 19 auf, wobei der erste Plattenkörper 17 einen Boden des Verdeckkastens 7 bildet und als steife Platte ausgebildet ist. Der Verdeckkasten 7 ist in Fahrzeugheckrichtung hinter sich in einem Fahrgastraum 9 befindlichen Fondsitzen 11 und einem Überrollschutzsystem 12 angeordnet, wobei der erste Plattenkörper 17 in der in der Fig. 2 dargestellten Position eine untere Verdeckaufnahmestellung einnimmt.

In der unteren Verdeckaufnahmestellung des ersten Plattenkörpers 17 reduziert der Verdeckkasten 7 mit seinem Verdeckkastenraum 16 das Volumen des von einem Deckel 15 begrenzten heckseitigen Stauraums 13 des Cabriolet-Fahrzeugs 1.

Der zweite Plattenkörper 19 des Verdeckkastens 7, welcher in der Verdeckaufnahmestellung des ersten Plattenkörpers 17 einen heckseitigen Abschluss des Verdeckkastens 7 bildet, ist an seinem in Fahrzeughöhenrichtung oberen Ende gelenkig an einer Fahrzeugkarosserie festgelegt und kann um einen Gelenkpunkt 14 in Richtung des Verdeckkastenraums 16 verschwenkt werden.

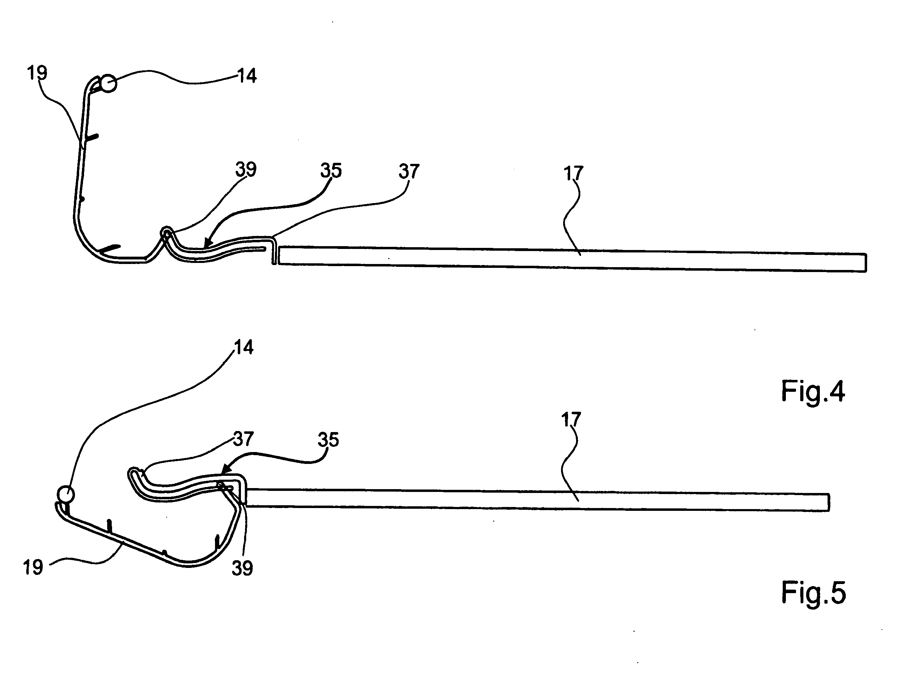

Hierbei wird der zweite Plattenkörper 19 bei einer Bewegung des ersten Plattenkörpers 17 von seiner unteren Verdeckaufnahmestellung in seine obere Stellung mittels einer Kulissenführung 35 von der in der Fig. 4 dargestellten, annähernd vertikalen Position in eine in der Fig. 5 dargestellte, annähernd horizontale Position bewegt, wobei der zweite Plattenkörper 19 dabei zwangsgeführt in Fahrzeugfrontrichtung nach vorne verschwenkt wird.

An einem in Fahrzeugheckrichtung hinteren Ende des ersten Plattenkörpers 17 ist vorliegend eine in den Fig. 4 und Fig. 5 dargestellte Kulisse 37 der Kulissenführung 35 angeordnet, in welcher der zweite Plattenkörper 19 über einen Kugelkörper 39 geführt ist. Die Kulisse 37 ist dabei derart ausgebildet, dass der zweite Plattenkörper 19 bei einem sich in seiner oberen Stellung befindlichen ersten Plattenkörper 17 derart um den Gelenkpunkt 14 verschwenkt ist, dass der zweite Plattenkörper 19 in Fahrzeughöhenrichtung unterhalb der Kulisse 37 angeordnet ist.

Zur Zwangssteuerung des zweiten Plattenkörpers 19 kann eine oben beschriebene Kulissenführung oder aber es können auch mehrere Kulissenführungen vorgesehen sein. Bei einer Kulissenführung kann diese insbesondere in einem fahrzeugmittigen Bereich angeordnet werden. Bei beispielsweise zwei Kulissenführungen ist es besonders vorteilhaft, wenn jeweils eine Kulissenführung in einem einer Fahrzeugseite zugeordneten Bereich des ersten Plattenkörpers 17 angeordnet ist.

Der erste Plattenkörper 17 des Verdeckkastens 7 ist von einem elektrischen Antrieb 6 über eine Mechanik 8 in Fahrzeughöhenrichtung bewegbar, wobei der erste Plattenkörper 17 des Verdeckkastens 7 mit einer geringen Überschusskraft, welche beispielsweise 100 N beträgt, bewegt wird.

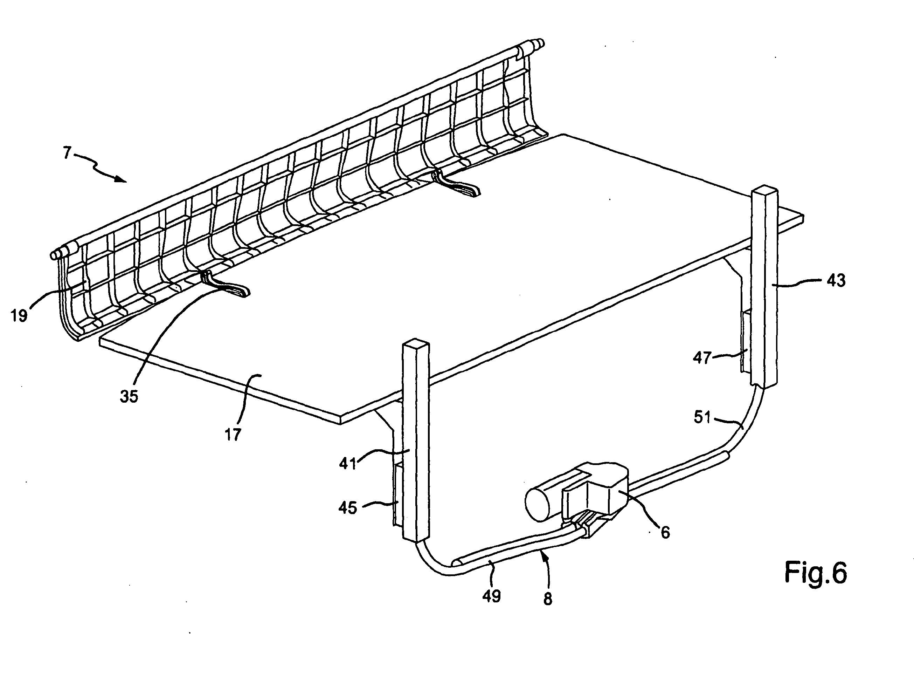

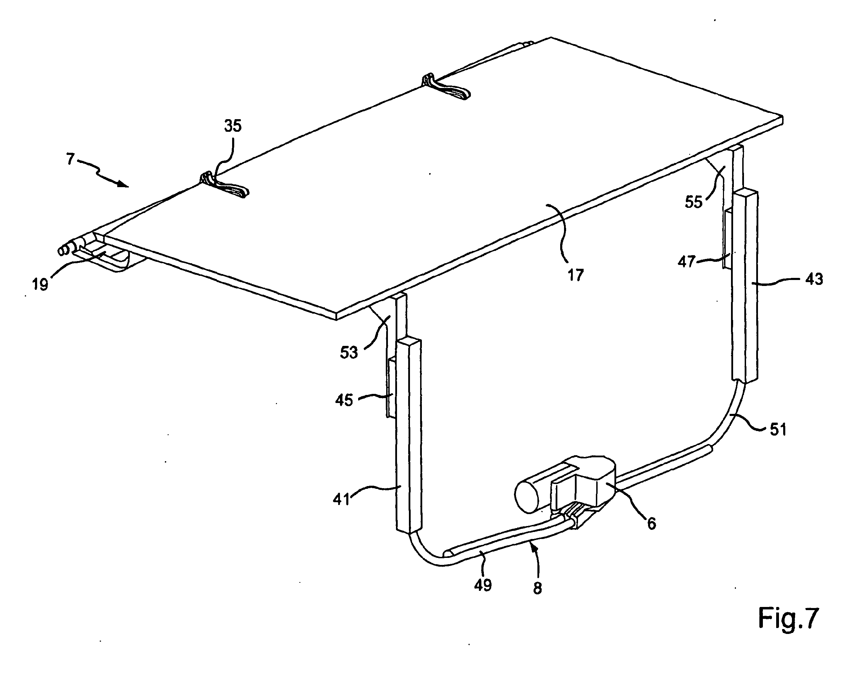

In den Fig. 6 und Fig. 7 ist der Verdeckkasten 7 näher dargestellt, wobei ersichtlich ist, dass zur Bewegung des ersten Plattenkörpers 17 zwei jeweils einer Fahrzeugseite zugeordnete Führungsschienen 41 und 43 vorgesehen sind, welche jeweils baugleich ausgebildet sind. In den Führungsschienen kann jeweils ein Schlitten 45 bzw. 47 an der dem ersten Plattenkörper 17 zugewandten Seite der Führungsschienen 41 bzw. 43 in Fahrzeughöhenrichtung bewegt werden.

Hierzu wirkt der elektrische Antrieb 6 mittels sich in Führungsrohren 49 und 51 befindlichen nicht näher dargestellten Steigungsseilen mit dem jeweiligen Schlitten 45 bzw. 47 zusammen. Die Steigungsseile weisen ein Gewinde auf, wobei diese mit einem Zahnrad des elektrischen Antriebs 6 derart zusammenwirken, dass eine Drehung des Zahnrads des elektrischen Antriebs 6 entsprechend der Drehrichtung des Zahnrads in einer Bewegung der Steigungsseile in Richtung der Führungsschienen 41 bzw. 43 oder in Richtung des elektrischen Antriebs 6 resultiert. Durch die Betätigung der Steigungsseile beider Führungsrohre 49 und 51 durch ein Zahnrad und die entgegengesetzte Bewegung der beiden Steigungsseile kann vorteilhafterweise eine synchrone Bewegung der Schlitten 45 und 47 in den Führungsschienen 41 bzw. 43 sichergestellt werden.

Eine Verbindung des ersten Plattenkörpers 17 mit den Schlitten 45 und 47 der Führungsschienen 41 bzw. 43 ist mittels jeweils eines Winkelblechs 53 und 55 realisiert, welches sowohl mit dem ersten Plattenkörper 17 als auch mit dem jeweiligen Schlitten 45 bzw. 47 fest verbunden sind.

Somit kann der erste Plattenkörper 17 durch den elektrischen Antrieb 6 von seiner eine Grundstellung bildenden, in der Fig. 6 dargestellten Verdeckaufnahmestellung in eine in der Fig. 7 dargestellte obere, das Volumen des Verdeckkastenraums 16 verkleinernde Stellung und umgekehrt bewegt werden.

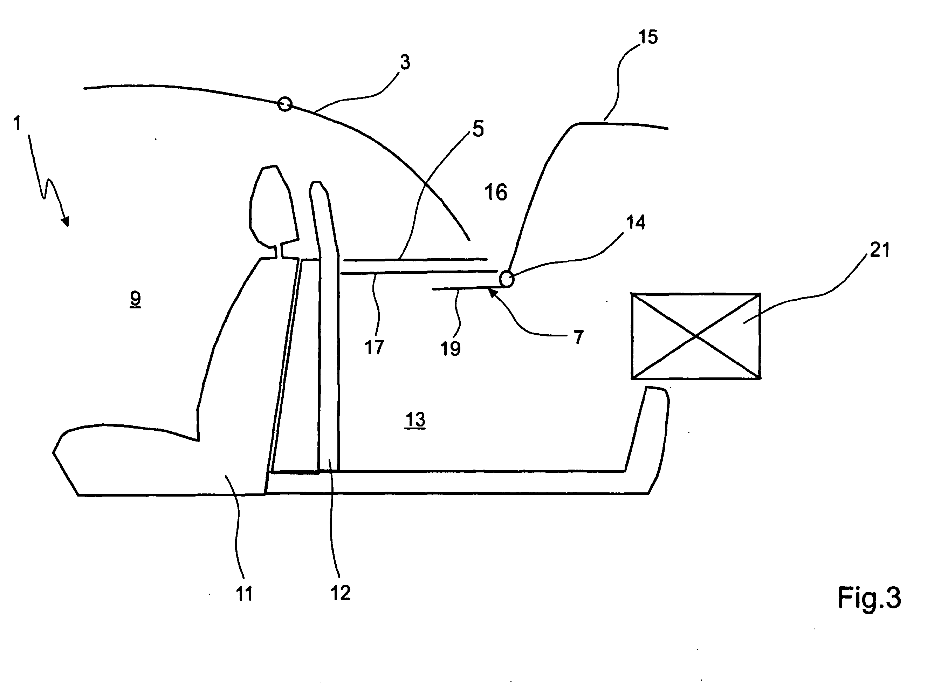

Befindet sich der erste Plattenkörper 17 des Verdeckkastens 7 gemäß Fig. 3 in der oberen Stellung, dann ist der zweite Plattenkörper 19 des Verdeckkastens 7 in Fahrzeughöhenrichtung unterhalb des ersten Plattenkörpers 17 des Verdeckkastens 7 in Fahrzeugfrontrichtung verschwenkt. Der heckseitige Stauraum 13 wird somit in der oberen Stellung des ersten Plattenkörpers 17 des Verdeckkastens 7 um das Volumen vergrößert, um das der Verdeckkastenraum 16 verkleinert wird.

Zur Bewegung der Plattenkörper 17 und 19 des Verdeckkastens wird der elektrische Antrieb von einem nicht näher dargestellten Verdecksteuergerät angesteuert, welches mit Sensoren zur Erkennung der Endlagenpositionen, also beispielsweise für den ersten Plattenkörper 17 die obere Stellung und die untere Verdeckaufnahmestellung, wirkverbunden ist. Dem Verdecksteuergerät ist weiterhin als Speicher ein sogenannter Electrically Erasable Programmable Read-Only Memory (EEPROM) zugeordnet, welcher den Beladungszustand des heckseitigen Stauraums 13 in einem Statusbit speichern kann.

Zur Erkennung einer Blockierung während der Bewegung des ersten Plattenkörpers 17 ist mit dem Verdecksteuergerät eine Detektiereinrichtung verbunden, welche eine Kollision des von seiner oberen Stellung in seine untere Verdeckaufnahmestellung bewegten ersten Plattenkörpers 17 mit einem sich in einem Bewegungsraum des ersten Plattenkörpers 17 befindlichen Gegenstands detektieren kann. Hierzu ist die Detektiereinrichtung so ausgelegt, dass sie über Abweichungen der Werte des Motorstroms des elektrischen Antriebs und/oder der Verfahrgeschwindigkeit des ersten Plattenkörpers 17 des Verdeckkastens 7 und/oder der Verfahrgeschwindigkeit des ersten Plattenkörpers 17 des Verdeckkastens 7 eine Kollision erkennen kann. Der Bewegungsraum des ersten Plattenkörpers 17 ergibt sich dabei aus dem Unterschied der Positionen des ersten Plattenkörpers 17 in seiner oberen Stellung und in seiner unteren Verdeckaufnahmestellung.

Soll das Verdeck 3 des Cabriolet-Fahrzeugs 1 geöffnet werden, verfügt das Verdecksteuergerät bereits über die Information des aktuellen Beladungszustandes und kann dementsprechend für den Fall, dass keine Kollision erkannt wurde - der Statusbit des Speichers des Verdecksteuergeräts ist auf 0 gesetzt - das Verdeck 3 öffnen oder für den Fall, dass eine Kollision erkannt wurde - der Statusbit des Speichers des Verdecksteuergeräts ist auf 1 gesetzt - das Öffnen verweigern und dem Bediener beispielsweise eine Botschaft über den Beladungszustand auf einem Armaturenbrett zukommen lassen.

Um einem Belader des heckseitigen Stauraums 13 eine Hilfestellung bezüglich der maximalen Beladungshöhe zu geben, ist in dem heckseitigen Stauraum 13 ein Schalter vorgesehen, mit welchem eine Bewegung des sich nach dem Öffnen des Deckels 15 in der oberen Stellung befindlichen ersten Plattenkörper 17 in seine Verdeckaufnahmestellung auslösbar ist. Weiterhin sind in dem heckseitigen Stauraum 13 hierzu Markierungen angebracht, mittels welcher die maximale Beladungshöhe des heckseitigen Stauraums 13 ohne in den Bewegungsraum des ersten Plattenkörpers 17 einzugreifen, visuell einfach möglich ist.

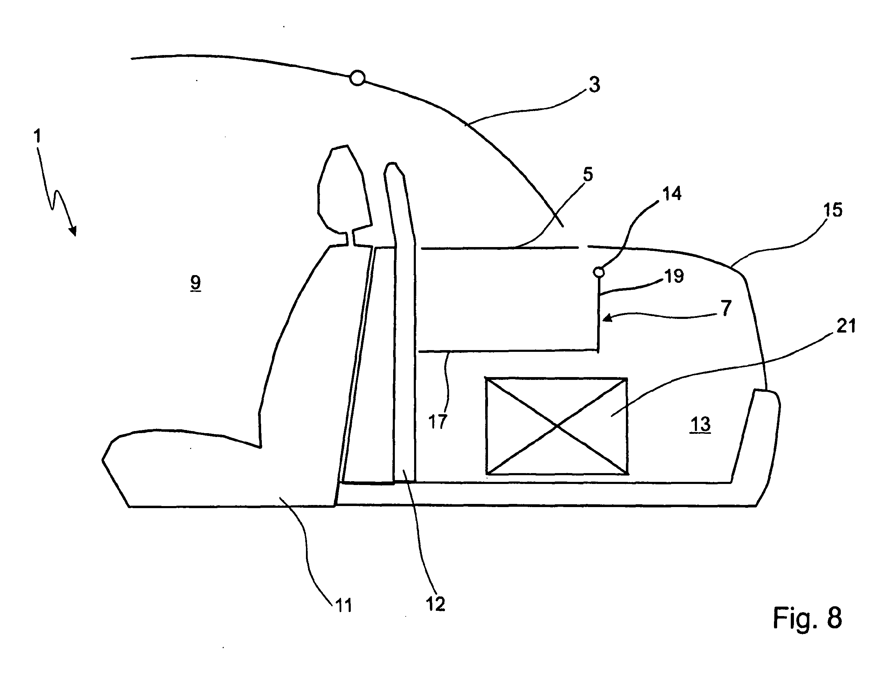

In der Fig. 8 ist das Cabriolet-Fahrzeug 1 mit sich in dem heckseitigen Stauraum 13 befindlichem Ladegut 21 dargestellt, wobei sich das Ladegut nicht in dem Bewegungsraum des ersten Plattenkörpers 17 des Verdeckkastens 7 befindet und dieser sich somit bei geschlossenem heckseitigen Deckel 15 in seiner unteren Verdeckaufnahmestellung befindet.

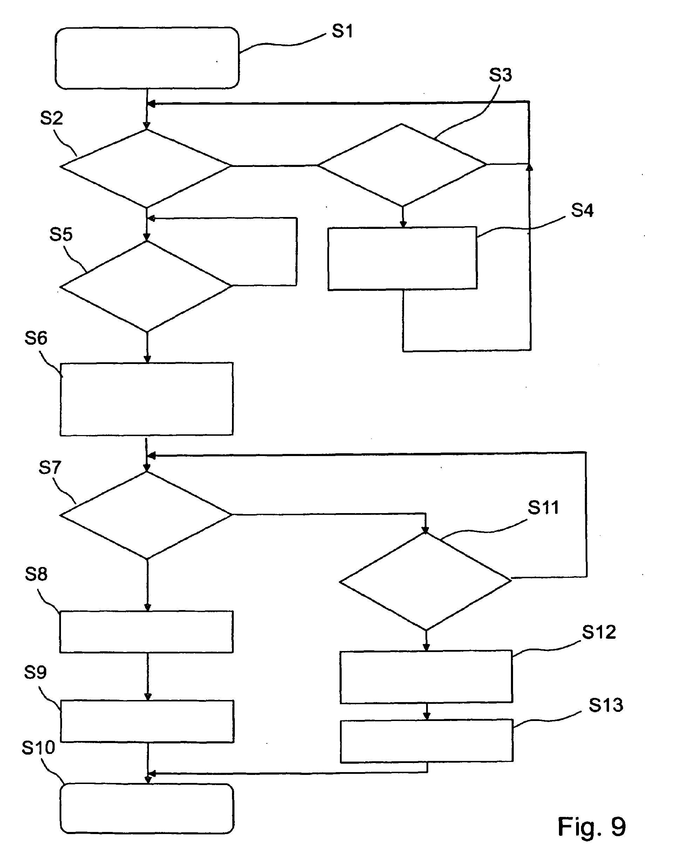

Die Ansteuerung der Plattenkörper 17 und 19 durch den mit dem Verdecksteuergerät verbundenen elektrischen Antrieb ist variabel entsprechend dem in der Fig. 9 dargestellten, in dem Verdecksteuergerät hinterlegten Ablaufdiagramm ausgelegt.

Das Verdecksteuergerät erkennt eine Startbedingung S1 für das Ablaufschema wenn der heckseitige Deckel 15 von einem Benutzer geöffnet wird. Zunächst wird dann in einer nachfolgenden ersten Unterscheidungsfunktion S2 geprüft, ob der heckseitige Deckel 15 geschlossen ist.

Wenn dies nicht der Fall ist, wird in einer weiteren, zweiten Unterscheidungsfunktion S3 geprüft, ob der erste Plattenkörper 17 in der oberen Stellung ist. Trifft dies zu, wird als nächstes erneut die erste Unterscheidungsfunktion S2 aufgerufen.

Wird die zweite Unterscheidungsfunktion S3 negativ beantwortet, wird eine Verarbeitungsfunktion S4 aufgerufen, mit der der erste Plattenkörper 17 von dem elektrischen Antrieb in die obere Stellung bewegt wird, bis diese erreicht ist. Anschließend wird auch hier erneut die erste Unterscheidungsfunktion S2 aufgerufen.

Wird die erste Unterscheidungsfunktion S2 schließlich positiv beantwortet, wird in einer darauf folgenden dritten Unterscheidungsfunktion S5 geprüft, ob ein Zustand "Zündung Ein" vorliegt. Bei einer negativen Antwort wird in einer Rückkopplungsschleife erneut die dritte Unterscheidungsfunktion S5 geprüft bis diese schließlich positiv beantwortet werden kann.

In diesem Fall wird als nächstes eine Verarbeitungsfunktion S6 aufgerufen, mit der der elektrische Antrieb eingeschaltet wird und die Plattenkörper 17 und 19 abgesenkt werden.

In einer darauf folgenden vierten Unterscheidungsfunktion S7 wird geprüft, ob der erste Plattenkörper 17 die Verdeckaufnahmestellung erreicht hat.

Ist dies der Fall, wird in einer nachfolgenden Verarbeitungsfunktion S8 der elektrische Antrieb ausgeschaltet und darauf folgend in einer weiteren Verarbeitungsfunktion S9 ein Statusbit im Speicher des Verdecksteuergeräts auf 0 gesetzt und ein gegebenenfalls vorhandener Wert überschrieben. Hiermit ist das Ende S10 des Ablaufes erreicht.

Wenn allerdings die vierte Unterscheidungsfunktion S7 negativ beantwortet wird, wird in einer darauf folgenden fünften Unterscheidungsfunktion S11 geprüft, ob eine Blockierung des Bewegungsraumes des ersten Plattenkörpers 17 detektiert wurde. Wenn dies nicht der Fall ist, wird erneut die vierte Unterscheidungsfunktion S7 geprüft. Wird hingegen die fünfte Unterscheidungsfunktion S11 positiv beantwortet, werden die Plattenkörper 17 und 19 in einer anschließenden Verarbeitungsfunktion S12 reversiert, bis sie wieder ihre obere Stellung erreicht haben. In einer darauf folgenden Verarbeitungsfunktion S13 wird der Statusbit im Speicher des Verdecksteuergeräts mit dem Wert 1 überschrieben und der Ablauf beendet.

## Patentansprüche

1. Cabriolet-Fahrzeug mit einem in einem Verdeckkasten (7) ablegbaren Verdeck (3), wobei der Verdeckkasten (7) in Fahrzeugheckrichtung hinter einem mit Fondsitzen (11) ausgebildeten Fahrgastraum (9) angeordnet und gegenüber einem heckseitigen Stauraum (13) durch wenigstens einen einen Boden des Verdeckkastens (7) bildenden Plattenkörper (17) abgegrenzt ist, der in Fahrzeughöhenrichtung zwischen einer unteren Verdeckaufnahmestellung und einer oberen, den heckseitigen Stauraum (13) vergrößernden Stellung bewegbar ist,
**dadurch gekennzeichnet,**
**dass** ein dem Verdeckkasten (7) zugeordneter Antrieb (6) derart angesteuert ist, dass der wenigstens eine Plattenkörper (17) als Grundstellung bei erkanntem Nichtbeladungszustand seines Bewegungsraumes, d. h., wenn sich kein Gegenstand in dem Bewegungsraum des Plattenkörpers (17) befindet, die untere Verdeckaufnahmestellung einnimmt und der Plattenkörper (17) bei einem Öffnen eines den heckseitigen Stauraum (13) abschließenden Deckels (15) in seine obere Stellung bewegt ist.

2. Cabriolet-Fahrzeug nach Anspruch 1,
**dadurch gekennzeichnet,**
**dass** der Plattenkörper (17) von einer dem Antrieb (6) zugeordneten Mechanik (8) in Fahrzeughöhenrichtung insbesondere mit einer geringen Überschusskraft verfahrbar ist.

3. Cabriolet-Fahrzeug nach Anspruch 2,
**dadurch gekennzeichnet,**
**dass** der Plattenkörper (17) mit wenigstens einer Führungsschiene (41, 43) wirkverbunden ist, welche mit dem Antrieb (6) über die Mechanik (8) zusammenwirkt, wobei der Plattenkörper (17) mittels einem mit der Führungsschiene (41, 43) zusammenwirkenden Schlitten (45, 47) von seiner oberen Stellung in seine untere Verdeckaufnahmestellung und umgekehrt bewegbar ist.

4. Cabriolet-Fahrzeug nach einem der Ansprüche 1 bis 3,
**dadurch gekennzeichnet,**
**dass** eine Detektiereinrichtung vorgesehen ist, mittels welcher eine Kollision des von seiner oberen Stellung in seine untere Verdeckaufnahmestellung bewegten Plattenkörpers (17) mit einem sich in dem heckseitigen Stauraum (13) befindlichen Gegenstand (21) mittels Bewegungsparameter detektierbar ist.

5. Cabriolet-Fahrzeug nach einem der Ansprüche 1 bis 4,
**dadurch gekennzeichnet,**
**dass** der Antrieb (6) als elektrischer Antrieb ausgebildet ist.

6. Cabriolet-Fahrzeug nach einem der Ansprüche 4 oder 5,
**dadurch gekennzeichnet,**
**dass** die Detektiereinrichtung zur Kollisionserkennung bei einer Bewegung des ersten Plattenkörpers (17) aus seiner oberen Stellung in seine untere Verdeckaufnahmestellung mittels des Motorstroms des elektrischen Antriebs (6) und/oder der Verfahrgeschwindigkeit und/oder der Verfahrzeit des Plattenkörpers (17) des Verdeckkastens (7) ausgelegt ist.

7. Cabriolet-Fahrzeug nach einem der Ansprüche 1 bis 6,
**dadurch gekennzeichnet,**
**dass** ein insbesondere als Verdecksteuergerät ausgebildetes Steuergerät zur Steuerung der Bewegung des wenigstens einen Plattenkörpers (17, 19) vorgesehen ist, wobei dem Steuergerät ein Speicher zur Speicherung des Beladungszustands des heckseitigen Stauraums (13) zugeordnet ist.

8. Cabriolet-Fahrzeug nach einem der Ansprüche 1 bis 7,
**dadurch gekennzeichnet,**
**dass** der Plattenkörper (17) bei einem geschlossenen Zustand des den heckseitigen Stauraum (13) abschließenden Deckels (15) und bei einer Betätigung einer Zündung des Cabriolet-Fahrzeugs (1) in seine untere Verdeckaufnahmestellung bewegt ist.

9. Cabriolet-Fahrzeug nach einem der Ansprüche 1 bis 8,
**dadurch gekennzeichnet,**
**dass** ein Sensor zur Erkennung der Endlagenposition der oberen Stellung und der unteren Verdeckaufnahmestellung des Plattenkörpers (17) vorgesehen ist.

10. Cabriolet-Fahrzeug nach einem der Ansprüche 1 bis 9,
**dadurch gekennzeichnet,**
**dass** im heckseitigen Stauraum (13) ein Schalter vorgesehen ist, mittels welchem eine Bewegung des Plattenkörpers (17) des Verdeckkastens (7) von seiner oberen Stellung in seine untere Verdeckaufnahmestellung auslösbar ist.

11. Cabriolet-Fahrzeug nach einem der Ansprüche 1 bis 10,
**dadurch gekennzeichnet,**
**dass** im heckseitigen Stauraum (13) Markierungen vorgesehen sind, anhand derer die maximal zulässige maximale Ladehöhe des heckseitigen Stauraums (13) visuell einschätzbar ist.

12. Cabriolet-Fahrzeug nach einem der Ansprüche 1 bis 11,
**dadurch gekennzeichnet,**
**dass** der Plattenkörper (17) einen ersten Plattenkörper bildet und der Verdeckkasten (7) einen zweiten Plattenkörper (19) aufweist, welcher den Verdeckkasten (7) bei sich in der Verdeckaufnahmestellung befindlichem ersten Plattenkörper (17) heckseitig begrenzt, wobei der zweite Plattenkörper (19) zwangsgesteuert mit dem ersten Plattenkörper (17) derart wirkverbunden ist, dass der zweite Plattenkörper (19) bei einem sich in der oberen Stellung befindlichen ersten Plattenkörper (17) um einen oberen Gelenkpunkt (14) insbesondere in Fahrzeugfrontrichtung verschwenkt ist.

13. Cabriolet-Fahrzeug nach Anspruch 12,
**dadurch gekennzeichnet,**
**dass** der zweite Plattenkörper (19) mit dem ersten Plattenkörper (17) über eine Kulissenführung (35) zwangsgesteuert verbunden ist.

## Claims

1. A convertible vehicle with a hood (3) which can be stowed in a hood compartment (7), said hood compartment (7) being arranged, in the direction of rear vehicle section, behind a passenger compartment (9) provided with rear seats (11) and being separated from a rear stowage space (13) by at least one plate body (17) forming a base of the hood compartment (7), said plate body (17) being movable in the vertical direction of the vehicle between a lower hood-receiving position and an upper position enlarging the rear stowage space (13),
**characterised in that**
a drive (6) assigned to the hood compartment (7) is controlled such that the at least one plate body (17) assumes the lower hood-receiving position as its basic position when its movement area has been recognised as unloaded, i.e. when there is no object in the movement area of the plate body (17), and the plate body (17) is moved into its upper position when a lid (15) covering the rear stowage space (13) is opened.

2. The convertible vehicle according to claim 1, **characterised in that** the plate body (17) is displaceable in the vertical direction of the vehicle, in particular with a slightly excessive force, by a mechanical system (8) assigned to the drive (6).

3. The convertible vehicle according to claim 2, **characterised in that** the plate body (17) is operatively connected with at least one guide rail (41, 43) which cooperates with the drive (6) via the mechanical system (8), the plate body (17) being movable from its upper position to its lower hood-receiving position, and vice versa, by means of a carriage (45, 47) cooperating with the guide rail (41, 43).

4. The convertible vehicle according to any one of claims 1 to 3, **characterised in that** a detecting device is provided by means of which a collision of the plate body (17) moved from its upper position to its lower hood-receiving position with an object (21) located in the rear stowage space (13) can be detected on the basis of parameters of movement.

5. The convertible vehicle according to any one of claims 1 to 4, **characterised in that** the drive (6) is provided as an electric drive.

6. The convertible vehicle according to any one of claims 4 or 5, **characterised in that** the detecting device is provided for collision detection during a movement of the first plate body (17) from its upper position to its lower hood-receiving position by means of the motor current of the electric drive (6) and/or the speed of displacement and/or the time of displacement of the plate body (17) of the hood compartment (7).

7. The convertible vehicle according to any one of claims 1 to 6, **characterised in that** a control device, in particular one provided as a hood control device, is provided to control the movement of the at least one plate body (17, 19), said control device having assigned to it a memory for storing the loading condition of the rear stowage space (13).

8. The convertible vehicle according to any one of claims 1 to 7, **characterised in that** when the lid (15) covering the rear stowage space (13) is closed and the ignition of the convertible vehicle (1) is turned on, the plate body (17) is moved into its lower hood-receiving position.

9. The convertible vehicle according to any one of claims 1 to 8, **characterised in that** a sensor is provided to detect the end limits of the upper position and of the lower hood-receiving position of the plate body (17).

10. The convertible vehicle according to any one of claims 1 to 9, **characterised in that** a switch is provided in the rear stowage space (13) to trigger a movement of the plate body (17) of the hood compartment (7) from its upper position to its lower hood-receiving position.

11. The convertible vehicle according to any one of claims 1 to 10, **characterised in that** the rear stowage space (13) is provided with markings allowing to visually estimate the maximum allowable loading height of the rear stowage space (13).

12. The convertible vehicle according to any one of claims 1 to 11, **characterised in that** the plate body (17) forms a first plate body and the hood compartment (7) comprises a second plate body (19) which forms the rear end of the hood compartment (7) when the first plate body (17) is in the hood-receiving position, the second plate body (19) being forced into an operative connection with the first plate body (17) such that the second plate body (19) is pivoted about an upper point of articulation (14), in particular towards the front of the vehicle, when the first plate body (17) is in the upper position.

13. The convertible vehicle according to claim 12, **characterised in that** the second plate body (19) is forcibly connected with the first plate body (17) via a sliding guide (35).

## Revendications

1. Véhicule cabriolet avec une capote (3) déposable dans un compartiment de capote (7), ledit compartiment de capote (7) étant disposé, en vue vers l'arrière du véhicule, derrière un habitacle (9) équipé de sièges arrière (11) et étant séparé d'un espace de rangement arrière (13) par au moins un élément sous forme d'une plaque (17) formant un fond du compartiment de capote (7), ledit élément sous forme d'une plaque (17) étant déplaçable en direction verticale du véhicule entre une position inférieure de réception de capote et une position supérieure agrandissant l'espace de rangement arrière (13),
**caractérisé en ce que**
l'on commande un entraînement (6), associé au compartiment de capote (7), de manière à ce que l'au moins un élément sous forme d'une plaque (17) occupe la position inférieure de réception de capote en tant que position de départ lorsque sa zone de mouvement a été identifiée comme non pas chargée, c'est-à-dire s'il n y a aucun objet dans l'espace de mouvement de l'élément sous forme d'une plaque (17), et l'élément sous forme d'une plaque (17) est déplacé vers sa position supérieure lorsqu'un couvercle (15) couvrant l'espace de rangement arrière (13) est ouvert.

2. Véhicule cabriolet selon la revendication 1, **caractérisé en ce que** l'élément sous forme d'une plaque (17) est déplaçable en direction verticale du véhicule, notamment par une force légèrement excessive, par un système mécanique (8) associé à l'entraînement (6).

3. Véhicule cabriolet selon la revendication 2, **caractérisé en ce que** l'élément sous forme d'une plaque (17) est relié de manière opérative à au moins un rail de guidage (41, 43) coopérant avec l'entraînement (6) par le biais du système mécanique (8), l'élément sous forme d'une plaque (17) étant déplaçable de sa position supérieure vers sa position inférieure de réception de capote et inversement au moyen d'un chariot (45, 47) coopérant avec le rail de guidage (41, 43).

4. Véhicule cabriolet selon l'une quelconque des revendications 1 à 3, **caractérisé en ce que** l'on prévoit un dispositif de détection permettant de détecter, à base de paramètres de mouvement, une collision de l'élément sous forme d'une plaque (17), déplacé de sa position supérieure vers sa position inférieure de réception de capote, avec un objet (21) disposé dans l'espace de rangement arrière (13).

5. Véhicule cabriolet selon l'une quelconque des revendications 1 à 4, **caractérisé en ce que** l'entraînement (6) est réalisé sous forme d'un entraînement électrique.

6. Véhicule cabriolet selon l'une quelconque des revendications 4 ou 5, **caractérisé en ce que** le dispositif de détection est adapté pour détecter une collision lors du déplacement du premier élément sous forme d'une plaque (17) de sa position supérieure vers sa position inférieure de réception de capote au moyen du courant de moteur de l'entraînement électrique (6) et/ou de la vitesse de déplacement et/ou du temps de déplacement de l'élément sous forme d'une plaque (17) du compartiment de capote (7).

7. Véhicule cabriolet selon l'une quelconque des revendications 1 à 6, **caractérisé en ce que** l'on prévoit un dispositif de commande, notamment un dispositif de commande de capote, pour commander le déplacement de l'au moins un élément sous forme d'une plaque (17, 19), une mémoire étant associée au dispositif de commande pour mémoriser l'état de charge de l'espace de rangement arrière (13).

8. Véhicule cabriolet selon l'une quelconque des revendications 1 à 7, **caractérisé en ce que** l'élément sous forme d'une plaque (17) est déplacé dans sa position inférieure de réception de capote lorsque le couvercle (15) couvrant l'espace de rangement arrière (13) est fermé et l'allumage du véhicule cabriolet (1) a été activé.

9. Véhicule cabriolet selon l'une quelconque des revendications 1 à 8, **caractérisé en ce que** l'on prévoit un capteur pour détecter la position finale de la position supérieure et de la position inférieure de réception de capote de l'élément sous forme d'une plaque (17).

10. Véhicule cabriolet selon l'une quelconque des revendications 1 à 9, **caractérisé en ce que** l'on prévoit un commutateur dans l'espace de rangement arrière (13) pour déclencher un mouvement de l'élément sous forme d'une plaque (17) du compartiment de capote (7) de sa position supérieure vers sa position inférieure de réception de capote.

11. Véhicule cabriolet selon l'une quelconque des revendications 1 à 10, **caractérisé en ce que** l'espace de rangement arrière (13) présente des marques permettant une estimation visuelle de l'hauteur de chargement maximale permise de l'espace de rangement arrière (13).

12. Véhicule cabriolet selon l'une quelconque des revendications 1 à 11, **caractérisé en ce que** l'élément sous forme d'une plaque (17) constitue un premier élément sous forme d'une plaque et le compartiment de capote (7) comprend un deuxième élément sous forme d'une plaque (19) qui constitue l'extrémité arrière du compartiment de capote (7) lorsque le premier élément sous forme d'une plaque (17) se trouve en position de réception de capote, le deuxième élément sous forme d'une plaque (19) étant en liaison active, par commande forcée, avec le premier élément sous forme d'une plaque (17) de manière à faire basculer le deuxième élément sous forme d'une plaque (19) autour un point d'articulation supérieur (14), ledit basculement s'effectuant notamment vers l'avant du véhicule, lorsque le premier élément sous forme d'une plaque (17) se trouve en position supérieure.

13. Véhicule cabriolet selon la revendication 12, **caractérisé en ce que** le deuxième élément sous forme d'une plaque (19) est en liaison, par commande forcée, avec le premier élément sous forme d'une plaque (17) au moyen d'un guidage à coulisse (35).
